# EUROPÄISCHE PATENTSCHRIFT

(11) **EP 1 242 469 B1**
(45) Veröffentlichungstag und Bekanntmachung des Hinweises auf die Patenterteilung: **10.03.2004**
(21) Anmeldenummer: 00977456.3
(22) Anmeldetag: 31.10.2000
(51) Int. Cl.: C08F 4/48, C08F 36/04, C08F 12/04

(54) **VERFAHREN ZUR ANIONISCHEN POLYMERISATION VON VINYLAROMATISCHEN MONOMEREN**
METHOD FOR CARRYING OUT THE ANIONIC POLYMERIZATION OF VINYL AROMATIC MONOMERS
PROCEDE POUR LA POLYMERISATION ANIONIQUE DE MONOMERES AROMATIQUES VINYLIQUES

(30) Priorität: 13.11.1999 DE 19954818
(43) Veröffentlichungstag der Anmeldung: 25.09.2002
(73) Patentinhaber: BASF AKTIENGESELLSCHAFT, 67056 Ludwigshafen (DE)
(72) Erfinder: DESBOIS, Philippe, 67487 Maikammer (DE); WARZELHAN, Volker, Singapore 257772 (SG); SCHADE, Christian, 67061 Ludwigshafen (DE); FONTANILLE, Michel, F-33400 Talence (FR); DEFFIEUX, Alain, F-33200 Bordeaux-Cauderan (FR); MENORET, Stephane, F-33800 Bordeaux (FR)
(86) Internationale Anmeldenummer: PCT/EP2000/010772
(87) Internationale Veröffentlichungsnummer: WO 2001/036494

(56) Entgegenhaltungen:
- EP-A- 0 098 408
- DE-A- 19 806 774
- US-A- 3 294 774

## Beschreibung

Die Erfindung betrifft ein Verfahren zur anionischen Polymerisation von vinylaromatischen Monomeren oder Dienen in Gegenwart eines Lithiumorganyls oder Lithiumalkoholates und einer Magnesium- oder einer Aluminiumverbindung.

Die anionische Polymerisation von Styrol- oder Styrolbutadiencopolymeren in Gegenwart von Lithiumalkylen und retardierend wirkenden Zusätzen wie Aluminium- oder Magnesiumalkylen ist beispielsweise bekannt aus WO 98/07765. Die WO 97/33923 beschreibt Polymerisationsinitiatoren, die beispielsweise Dialkylmagnesium und Lithiumalkyl oder Lithiumalkoholate enthält. Diese Initiatoren gestatten die Polymerisation von Styrolpolymeren auch bei höheren Monomerkonzentrationen.

Die WO 99/42498 beschreibt die vorteilhafte Verwendung von Mischungen aus Aluminiumalkylen und Magnesiumalkylen als retardierend wirkende Zusätze.

Weiterhin wurden zur anionischen Polymerisation von Styrol Polymerisationsinitiatoren beschrieben, die sterisch gehinderte Phenolate des Aluminiums (WO 99/42499) bzw. der Erdalkalimetalle (JP-A-11-116613) enthalten.

Styrolmonomeren, die nicht sofort nach der Destillation zur Polymerisation eingesetzt werden, müssen zur Lagerung und Transport mit Stabilisatoren versetzt werden. Diese können die Polymerisationsgeschwindigkeit der lithiuminitiierten Polymerisation beeinflussen, insbesondere in Gegenwart der genannten retardierend wirkenden Zusätze. In der Regel müssen daher die Stabilisatoren aus dem Styrol vor der Polymerisation entfernt werden.

Aufgabe der vorliegenden Erfindung war es daher, ein Verfahren zur kontrollierten anionischen Polymerisation von vinylaromatischen Monomeren oder Dienen zu finden, das insbesondere auch für stabilisierte Monomere einsetzbar ist.

Daher wurde ein Verfahren zur anionischen Polymerisation von vinylaromatischen Monomeren oder Dienen in Gegenwart eines Lithiumorganyls oder Lithiumalkoholats und einer Magnesium- oder einer Aluminiumverbindung gefunden, wobei man ein sterisch gehindertes Phenol oder Amin zugibt.

Als sterisch gehindertes Phenol können beispielsweise alkylierte Phenole und Phenolderivate wie 2,6-Di-tert.-butyl-4-methyl-phenol, 2,6-Di-tert.-butyl-4-nonyl-phenol, 4,4'-Butylidenbis-(2-tert.-butyl -5-methyl -phenol), 4,4'-Thio-bis-(2-tert.butyl -5-methyl -phenol), 2,2'-Thio-bis-(4-methyl-6-tert.-butylphenol), 2-Methyl-4,6-bis-[(octylthio)methyl]-phenol, 2,2'-Methylen-bis-(4-methyl-6-tert.-butyl-phenol), 2,2'-Methylenbis-[4-methyl-6-(1-methyl-cyclohexyl)-phenol), 2,2'-Isobutylidenbis-(4,6-dimethyl-phenol), 2,4-Dimethyl-6-(1-methyl-cyclohexyl)-phenol, 1,1,3-Tris-(2'-methyl-4'-hydroxy-5'-tert.-butylphenyl)-butan, styrylierte, sterisch gehinderte Phenole, 1,3,5-Tris-[3,5-bis-(1,1-dimethylethyl)-4-hydroxybenzyl)-2,4,6-trimethylbenzol, 2,4-Dimethyl-6-(1-methylpentadecyl)-phenol, 3,3',3'',5,5',5''-hexa-tert.-butyl-a,a',a''-(mesitylen-2,4,6-triyl)-tri-p-cresol, 6,6'-di-tert.butyl-2,2'-thiodi-p-cresol, alkylierte Hydrochinone wie beispielsweise 2,5-Di-tert.-amyl-hydrochinon, butylierte Reaktionsprodukte aus p-Cresol und Dicyclopentadien (z. B. CAS Reg.-No [68610-51-5]) oder α-Tocopherol eingesetzt werden.

Geeignete Amine sind beispielsweise sekundäre, aromatische Amine, wie Diphenylaminderivate, z. B. mit 2,4,4-trimethylpenten alkyliertes Diphenylamin , N,N-Dimethylindoanilin oder die als HALS-Verbindungen (hindered amine light stabilizers) bekannten Stabilisatoren geeignet.

Besonders bevorzugt verwendet man als sterisch gehindertes Phenol 2,6-Di-tert.-butyl-4-methylphenol oder 4-tert.-Butylpyrocatechol.

Das sterisch gehinderte Phenol und/oder Amin kann man wahlweise der Initiatormischung, den einzelnen Initiatorkomponenten, den Monomeren oder der Reaktionsmischung zugeben.

Besonders vorteilhaft können auch vinylaromatische Monomere und/oder Diene verwendet werden, die ein sterisch gehindertes Phenol oder Amin bereits als Stabilisator enthalten. In der Regel enthalten stabilisierte Monomeren 1 bis 200, bevorzugt 5 bis 50 ppm des sterisch gehinderten Phenol oder Amin. In diesem Falle können auch bei schwankenden Stabilisatorgehalten der eingesetzten Monomere ein konstanter Anteil an sterisch gehindertem Phenol in der Polymerisationslösung durch getrennte Zudosierung erreicht werden. Dadurch lassen sich auch unterschiedliche Rohstoffqualitäten verwenden.

Als vinylaromatischen Monomere können z.B. Styrol, α-Methylstyrol, p-Methylstyrol, Ethylstyrol, tert.-Butylstyrol, Vinyltoluol, 1,2-Diphenylethylen oder 1,1-Diphenylethylen oder Mischungen verwendet werden. Besonders bevorzugt wird Styrol eingesetzt.

Als Diene können beispielsweise Butadien, 1,3-Pentadien, 2,3-Dimethyl-butadien, Isopren oder Mischungen davon eingesetzt werden.

Üblicherweise werden als anionische Polymerisationsinitiatoren mono-, bi- oder multifunktionellen Alkalimetallalkyle, -aryle oder -aralkyle eingesetzt. Zweckmäßigerweise werden lithiumorganische Verbindungen eingesetzt wie Ethyl-, Propyl-, Isopropyl-, n-Butyl-, sec-Butyl-, tert.-Butyl-, Phenyl-, Diphenylhexyl-, Hexamethylendi-, Butadienyl-, Isoprenyl-, Polystyryllithium oder die multifunktionellen 1,4-Dilithiobutan, 1,4-dilithio-2-buten oder 1,4-Dilithiobenzol. Die benötigte Menge an Alkalimetallorganyl richtet sich nach dem gewünschten Molekulargewicht, der Art und Menge der weiteren eingesetzten Metallorganyle sowie der Polymerisationstemperatur. In der Regel liegt sie im Bereich von 0,002 bis 5 Molprozent bezogen auf Gesamtmonomerenmenge.

Die Polymerisation kann in Abwesenheit oder in Gegenwart eines Lösungsmittels durchgeführt werden. Die Polymerisation erfolgt zweckmäßigerweise in einem aliphatischen, isocyclischen oder aromatischen Kohlenwasserstoff oder Kohlenwasserstoffgemisch, wie Benzol, Toluol, Ethylbenzol, Xylol, Cumol, Hexan, Heptan, Octan oder Cyclohexan. Bevorzugt werden Lösungsmittel mit einem Siedepunkt oberhalb 95°C verwendet. Besonders bevorzugt wird Toluol verwendet.

Geeignete Magnesiumverbindungen sind solche der Formel R₂Mg, wobei die Reste R unabhängig voneinander Wasserstoff, Halogen, C₁-C₂₀-Alkyl oder C₆-C₂₀-Aryl bedeuten. Bevorzugt werden Dialkylmagnesiumverbindungen, insbesondere die als Handelsprodukte verfügbaren Ethyl-, Propyl-, Butyl-, Hexyl- oder Octylverbindungen eingesetzt. Besonders bevorzugt wird das in Kohlenwasserstoffen lösliche (n-Butyl)(s-Butyl)magnesium oder (n-Butyl)(n-octyl)-magnesium eingesetzt.

Als Aluminiumverbindungen können solche der Formel R₃Al verwendet werden, wobei die Reste R unabhängig voneinander Wasserstoff, Halogen, C₁-C₂₀-Alkyl oder C₆-C₂₀-Aryl bedeuten. Bevorzugte Aluminiumorganyle sind die Aluminiumtrialkyle wie Triethylaluminium, Tri-iso-Butylaluminium, Tri-n-butylaluminium, Tri-isopropylaluminium, Tri-n-hexylaluminium. Besonders bevorzugt wird Triisobutylaluminium eingesetzt. Als Aluminiumorganyle können auch solche verwendet werden, die durch teilweise oder vollständige Hydrolyse, Alkoholyse, Aminolyse oder Oxidation von Alkyl- oder Arylaluminiumverbindungen entstehen. Beispiele sind Diethylaluminium-ethoxid, Diisobutylaluminium-ethoxid, Diisobutyl-(2,6-di-tert.-butyl-4-methyl-phenoxy)aluminium (CAS-Nr. 56252-56-3), Methylaluminoxan, isobutyliertes Methylaluminoxan, Isobutylaluminoxan, Tetraisobutyldialuminoxan oder Bis(diisobutyl)aluminiumoxid.

Es können auch verschiedene Magnesiumverbindungen oder Aluminiumverbindungen zusammen verwendet werden.

Besonders bevorzugt führt man die Polymerisation des Styrol in Gegenwart einer Trialkylaluminium- und/oder Dialkylmagnesiumverbindung durch.

Die molaren Verhältnisse der Lithiumverbindungen und der Magnesium- oder Aluminiumverbindung können in weiteren Bereichen variiert werden. Sie richten sich vor allem nach dem gewünschten Molekulargewicht, der gewünschten Polymerisationsgeschwindigkeit und der Polymerisationstemperatur sowie der Art und Menge der Monomeren. Zweckmäßigerweise liegt das molare Verhältnis von Magnesium oder Aluminium zu Alkalimetall im Bereich von 0,2 : 1 bis 5 : 1. Verwendet man Magnesium- und Aluminiumverbindungen gemeinsam, so führt man die Polymerisation bei einem molaren Verhältnis der Summe von Magnesium und Aluminium zu Lithium im Bereich von 0,2:1 bis 5:1 durch.

Die Menge des zugegebenen sterisch gehinderten Phenol oder Amin richtet sich unter anderem nach der gewünschten retardierenden Wirkung. Setzt man lediglich mit sterisch gehinderten Phenolen oder Aminen stabilisierte Monomere ein, so wird die Polymerisatisationsgeschwindigkeit im wesentlichen durch die Magnesium oder Aluminiumverbindungen beeinflußt. Bevorzugt setzt man das sterisch gehinderte Phenol oder Amin jedoch in höheren Mengen ein. Dies führt zu einer besseren Reaktivitätskontrolle und höheren thermischen Stabilität der lebenden Polymerketten. Wenn das Phenol gegenüber der Magnesiumverbindung unterstöchiometrisch eingesetzt wird, kann das überschüssige Magnesium selbst als Ketteninitiator wirken. Bevorzugt führt man die Polymerisation bei einem molaren Verhältnis von Magnesium oder Aluminium (bzw. der Summe von Magnesium und Aluminium, falls Magnesium und Aluminiumverbindungen verwendet werden) zu Phenol oder Amin (bzw. der Summe aus Phenol und Amin) im Bereich von 1,1 bis 100, besonders bevorzugt im Bereich von 1,5 bis 10 durch.

Besonders bevorzugt kann das erfindungsgemäße Verfahren zur Herstellung von schlagzähen Polystyrolen verwendet werden. Hierzu wird das vinylaromatische Monomer in Gegenwart eines Copolymerisates aus vinylaromatischen Monomeren und Dienen als Kautschuk polymerisiert.

Besonders bevorzugt verwendet man als Kautschuk ein unsymmetrisches Styrol-Butadien-Styrol Dreiblockcopolymer S₁-H-S₂, wobei S₁ einen Styrolblock mit einem gewichtsmittleren Molekulargewicht M_{w} im Bereich von 5000 bis 100000 g/mol, bevorzugt 10000 bis 40000 g/mol, B einen Butadienblock mit einem gewichtsmittleren Molekulargewicht M_{w} im Bereich von 12000 bis 500000 g/mol, bevorzugt 70000 bis 250000 g/mol und S₂ einen Styrolblock mit einem gewichtsmittleren Molekulargewicht M_{w} im Bereich von 30000 bis 300000 g/mol, bevorzugt 50000 bis 200000 g/mol bedeuten.

Der Restbutadiengehalt der verwendeten Styrol-Butadien-Blockcopolymeren und des Homopolybutadiens sollte unter 200 ppm, bevorzugt unter 50 ppm, insbesondere unter 5 ppm liegen.

Der Kautschukgehalt, bezogen auf das schlagzähe Polystyrol beträgt zweckmäßigerweise 2 bis 25 Gew.-%.

Der Umsatz, bezogen auf Styrol der Hartmatrix beträgt in der Regel über 90 %, bevorzugt über 99 %. Das Verfahren kann prinzipiell auch zu einem vollständigen Umsatz führen.

Das schlagzähe Polystyrol kann auch hergestellt werden, indem man zunächst ein lithiumterminiertes Polydien herstellt und anschließend vinylaromatische Monomeren und die Magnesium- oder Aluminiumverbindung gleichzeitig zugibt. Dadurch bildet sich ein polydien-vinylaromatisches Monomer-Blockcopolymer und eine Hartmatrix aus vinylaromatischen Monomeren. Das Blockcopolymer kann auch zunächst durch Zugabe von vinylaromatischem Monomer polymerisiert und anschließend durch eine H-acide Verbindung, beispielsweise einen Alkohol abgebrochen werden. Hierbei bildet sich eine Lithiumverbindung, beispielsweise ein Lithiumalkoholat. Anschließend erfolgt die Polymerisation der Hartmatrix in Gegenwart von Magnesium und/oder Aluminiumverbindung. In Gegenwart gebildeter Lithiumverbindung kann eine erneute Initiierung mit einem Lithiumorganyl entfallen.

Die wachsenden Polymerketten im erfindungsgemäßen Verfahren weisen eine hohe thermische Stabilität auf. Dadurch wird eine Polymerisation bei hohen Monomerkonzentrationen und hohen Temperaturen ermöglicht. Das verwendete sterisch gehinderte Phenol bildet sich beim Ansäuern der Polymerlösung wieder zurück und dient gleichzeitig als Stabilisator für das Polymer.

Den erfindungsgemäßen Polymeren können weitere übliche Hilfsmittel wie Stabilisatoren, Gleitmittel, Flammschutzmittel, Antielektrostatika etc. zugesetzt werden.

### Beispiele

### Meßmethoden:

Die Molekulargewichte und Molekulargewichtsverteilungen wurden mittels Gelpermeationschromatographie (GPC) in Tetrahydrofuran und Auswertung der erhalten Chromatogramme unter Verwendung einer Polystyrol- bzw. Polybutadieneichung ermittelt.

Der Styrolgehalt und der 1,2-Vinylgehalt des Butadienanteils im Kautschuk wurde durch Auswertung der ¹H-kernresonanzspektroskopischen Daten bestimmt.

Für die mechanischen und physikalischen Messungen der schlagzähen Polystyrole wurden gepreßte (DIN 16770 - Teil 1) Probenkörper hergestellt. Die Streckspannung und Reißdehnung wurden bei 23°C nach DIN -ISO 527 bestimmt. Die Lochkerbschlagzähigkeit wurde nach DIN 53753 bei 23°C an gepressten Probekörpern mit den Abmessungen 50 mm * 6 mm * 4 mm (Lochdurchmesser: 3 mm) bestimmt.

### Beispiele

### Herstellung von Styrol-Butadien-Blockcopolymeren

### Beispiel 1

In einem 50 1 fassenden Rührkessel wurden 13,8 kg trockenes Toluol mit 95 ml einer 0,24 molaren Lösung von sec.-Butyllithium in Cyclohexan bei 40°C versetzt. Die Lösung wurde unter Rühren mit 320 g Styrol versetzt und innerhalb von 77 Minuten auf 45°C erwärmt. Anschließend wurden 3570 g Butadien innerhalb von 50 Minuten bei einer Innentemperatur von 40°C zugegeben und weitere 8 Minuten bei 44°C gerührt. Anschließend wurden 2008 g Styrol zugegeben, wobei die Temperatur zwischenzeitlich bis auf 53°C anstieg. Nach 74 min wurden 5 g 2,6-Di-tert.-butyl-4-methylphenol zugegeben. Durch Zugabe von 17,2 kg Styrol wurde der Feststoffgehalt von 30 Gew.-% auf 16 Gew.-% verringert. Das erhaltene S-B-S-Blockcopolymere mit den Blocklängen 15.000/155.000/85.000 g/mol zeigte eine Molmassenverteilung (GPC) mit einem Haupt-Molmassenpeak Mp bei 255.000 g/mol. Der Restbutadiengehalt war kleiner als 10 ppm. Der 1,2-Vinylanteil im Polybutadienblock wurde mittels ¹H-NMR-Spektroskopie zu 12 % ermittelt. Die Lösungsviskosität betrug 39,3 mPas (5,43%ige Lösung des Blockcopolymeren in Toluol).

### Beispiel 2

In einem 50 1 fassenden Rührkessel wurden 13,8 kg trockenes Toluol mit 95 ml einer 0,24 molaren Lösung von sec.-Butyllithium in Cyclohexan bei 40°C versetzt. Die Lösung wurde unter Rühren mit 320 g Styrol versetzt und innerhalb von 70 Minuten auf 42°C erwärmt. Anschließend wurden 3570 g Butadien innerhalb von 50 Minuten bei einer Innentemperatur von 40°C zugegeben und weitere 28 Minuten bei 43°C gerührt. Anschließend wurden 2008 g Styrol zugegeben, wobei die Temperatur zwischenzeitlich bis auf 45°C anstieg. Nach 90 Minuten wurde mit 1,8 ml Isopropanol abgebrochen. Der Feststoffgehalt wurde durch Zugabe von 17,2 kg Styrol, das mit 20 ppm 2,6-Di-tert.-butyl-4-methylphenol stabilisiert war, von 30 Gew.-% auf 16 Gew.-% verringert. Das erhaltene S-B-S-Blockcopolymere mit den Blocklängen 15.000/160.000/95.000 g/mol zeigte eine Molmassenverteilung (GPC) mit einem Haupt-Molmassenpeak Mp bei 270.000 g/mol. Der Restbutadiengehalt betrug weniger als 10 ppm. Der 1,2-Vinylanteil im Polybutadienblock wurde mittels ¹H-NMR-Spektroskopie zu 11 % ermittelt. Die Lösungsviskosität betrug 67,3 mPas (5,43%ige Lösung des Blockcopolymeren in Toluol).

### Herstellung von schlagzähem Polystyrol

### Beispiel 3

Für die kontinuierliche Polymerisation wurde ein doppelwandiger, 1,9-1 Rührkessel mit einem Standard-Ankerrührer verwendet. Der Reaktor war für einen Druck von 25 bar ausgelegt und mit einem Wärmeträgermedium für eine isotherme Polymerisationsführung temperiert. In den Rührkessel wurden unter Rühren (100 Umdrehungen pro Minute) kontinuierlich 380 g/h Styrol, 657 g/h der Blockcopolymerlösung aus Beispiel 1 und eine Lösung aus 11,9 g/h einer 0,8 molaren Lösung von (n-Butyl) (s-butyl)magnesium in Heptan, die im Gew.-Verhältnis 1:4 mit Toluol verdünnt worden war, dosiert und bei einer konstanten Massetemperatur von 99,5°C gerührt.

Die Lösung wurde in einen gerührten 4 Liter Turmreaktor weitergefördert, der mit zwei gleich großen Heizzonen versehen war. Die erste Zone wurde auf eine Innentemperatur von 127°C, die zweite auf 162°C eingeregelt. Der Austrag des Reaktors wurde mit 11 g/h einer 10 gew.-%igen Lösung aus Methanol in Toluol und über einen Mischer mit Mineralöl (2,5%) versetzt. Anschließend wurde die Schmelze über ein auf 240°C beheiztes Rohrstück geführt und über ein Druckregelventil in einen bei 10 mbar betriebenen Vacuumtopf entspannt. Die Schmelze wurde mit einer Schnecke ausgetragen und granuliert.

Nach kurzer Zeit stellte sich ein konstanter Fahrzustand ein. Der Feststoffgehalt betrug am Ausgang des ersten Kessels 30 Gew.-%. Am Austrag der kontinuierlichen Anlage wurde ein quantitativer Umsatz festgestellt. Die Polystyrol-Matrix besaß ein Molekulargewicht von Mw = 172.000 g/mol und eine Uneinheitlichkeit Mw/Mn von 3,80; die Verteilung war monomodal.

Es wurde ein Gehalt von unter 5 ppm Styrol, unter 5 ppm Ethylbenzol bestimmt.

### Beispiel 4

Es wurde wie in Beispiel 3 verfahren, mit der Ausnahme, daß kontinuierlich 369 g/h unstabilisiertes Styrol, 669 g/h der Blockcopolymerlösung aus Beispiel 2 und eine Lösung aus 13,1 g/h einer 0,8 molaren Lösung von (n-Butyl)(s-butyl)magnesium in Heptan, die im Gew.-Verhältnis 1:4 mit Toluol verdünnt worden war, dosiert und bei einer konstanten Massetemperatur von 92°C gerührt wurde. Die erste Zone des 4 Liter Turmreaktor wurde auf eine Innentemperatur von 126°C, die zweite auf 160°C eingeregelt. Der Feststoffgehalt betrug am Ausgang des ersten Kessels 37 Gew.-%, am Austrag der kontinuierlichen Anlage wurde ein quantitativer Umsatz festgestellt. Die Polystyrol-Matrix besaß ein Molekulargewicht von Mw = 178.000 g/mol und eine Uneinheitlichkeit Mw/Mn von 2,97; die Verteilung war monomodal. Es wurde ein Gehalt von unter 5 ppm Styrol, unter 5 ppm Ethylbenzol bestimmt.

### Beispiel 5

Beispiel 4 wurde wiederholt mit dem Unterschied, daß ein mit 20 ppm 2,6-Di-tert.-butyl-4-methylphenol stabilisiertes Styrol verwendet wurde.

Der Feststoffgehalt betrug am Ausgang des ersten Kessels 32,5 Gew.-%. Am Austrag der kontinuierlichen Anlage wurde ein quantitativer Umsatz festgestellt. Die Polystyrol-Matrix besaß ein Molekulargewicht von Mw = 178.500 g/mol und eine

Uneinheitlichkeit Mw/Mn von 3,08; die Verteilung war monomodal.

Es wurde ein Gehalt von unter 5 ppm Styrol, unter 5 ppm Ethylbenzol bestimmt.

**Tabelle 1:**

| Eigenschaften der schlagzähen Polystyrole aus den Beispielen 3 bis 5: | | | |
|---|---|---|---|
| Beispiel | 3 | 4 | 5 |
| Blockcopolymer aus Beispiel | 1 | 2 | 2 |
| Stabilisatorgehalt im Styrol (2,6-Di-tert.-butyl-4-methylphenol) | 0 | 10 ppm | 20 ppm |
| Streckspannung [N/mm²] | 19,8 | 26,2 | 24,7 |
| Reißdehnung [%] | 18,4 | 26,0 | 32,0 |
| Lochkerbschlagzähigkeit [kJ/m²] | 8,2 | 15,0 | 13,8 |
| Schmelzevolumenrate MVR [cm³/10 ml] | 4,9 | 5,2 | 4,9 |
| Wärmeformbeständigkeit [°C] Vicat B/50 | 92,5 | - | 92,2 |

### Herstellung einer 0,1 M Magnesiumphenolat-Lösung I1:

0,637 g 2,6-Di-tert.-butyl-4-methylphenol (Fa. Aldrich) und 2,9 ml einer 1,0 molaren Lösung von Dibutylmagnesium (DBM) in Heptan (Fa. Aldrich) wurden bei 25°C zusammengegeben und vor der Verwendung 10 Stunden in 26 ml Cyclohexan gerührt.

### Beispiel 6

Zu 200 ml Cyclohexan wurden 1,40 ml einer sec.-Butyllithiumlösung (1,3 M in Cyclohexan) und 1,7 ml Styrol gegeben und vier Stunden gerührt. 30 ml dieser Lösung wurden in einen 100 ml fassenden Kolben mit einer angeschmolzenen UV-Zelle transferiert. Die Konzentration des Polystyryllithiums wurde UV-spektroskopisch zu [PS-Li] = 1,25 * 10⁻² M bestimmt. Zu dieser Lösung wurde eine Mischung aus 3,0 ml einer 0,1 M Lösung I1 und 3,0 ml einer 0,1 M Lösung von (n-Butyl)(sec.-butyl)magnesium (DBM) in Cyclohexan zugegeben (molares Verhältnis Mg/Li = 1,6). Die Lösung wurde unter Rühren mit 3,05 ml Styrol versetzt und auf 100°C erwärmt. Die Abnahme der Styrol-Konzentration wurde bei 100°C UV-spektroskopisch verfolgt und nach einer Geschwindigkeitsgleichung erster Ordnung ausgewertet:

Die Steigung der erhaltenen Gerade betrug kₐ = 0,008 min⁻¹. Daraus und aus der Konzentration an Polystyryllithium, [PS-Li], wurde eine Reaktionsgeschwindig-keitskonstante kₐₚₚ = kₐ / [PS-Li]^{0,5} = 0,08 M^{-0,5} min⁻¹ ermittelt.

Nach 24 h wurde die Reaktion mit 1 ml Methanol abgebrochen. Der Umsatz betrug 100 Gew.-%. Das erhaltene Polystyrol hatte eine Molmasse Mn = 4.500 g/mol und eine Molmassenverteilung mit Mw/Mn = 1,25. Der Reststyrolgehalt betrug weniger als 10 ppm.

### Beispiel 7

Beispiel 6 wurde mit einem Mg/Li-Verhältnis von 4,8 wiederholt. Hierzu wurde die Polystyryllithium-Lösung mit einer Mischung aus 9,0 ml einer 0,1 M Lösung Il und 9,0 ml einer 0,1 M Lösung von DBM in Cyclohexan versetzt. Die Lösung wurde unter Rühren mit 2,35 ml Styrol versetzt und auf 100°C erwärmt. Die Abnahme der Styrol-Konzentration wurde bei 100°C UV-spektroskopisch verfolgt und nach einer Geschwindigkeitsgleichung erster Ordnung ausgewertet:

Die Steigung der erhaltenen Gerade betrug kₐ = 0,0028 min⁻¹. Daraus und aus der Konzentration an Polystyryllithium, [PS-Li], wurde eine Reaktionsgeschwindig-keitskonstante kₐₚₚ = kₐ / [PS-Li]^{0,5} = 0,03 M^{-0,5} min⁻¹ ermittelt.

Nach 24 h wurde die Reaktion mit 1 ml Methanol abgebrochen. Der Umsatz betrug 100 Gew.-%. Das erhaltene Polystyrol hatte eine Molmasse Mn von 2.100 g/mol und eine Molmassenverteilung Mw/Mn von 1,25.

Der Reststyrolgehalt lag unter 10 ppm.

### Beispiel 8

Beispiel 6 wurde mit einem Magnesium/Phenolat-Verhältnis von 3/1 wiederholt. Hierzu wurde die Polystyryllithium-Lösung mit einer Mischung aus 3,25 ml einer 0,1 M Lösung I1 und 6,5 ml einer 0,1 M Lösung von DBM in Cyclohexan versetzt (molares Verhältnis Mg/Li = 3,0). Die Lösung wurde unter Rühren mit 3,25 ml Styrol versetzt und auf 100°C erwärmt. Die Abnahme der Styrol-Konzentration wurde bei 100°C UV-spektroskopisch verfolgt und nach einer Geschwindigkeitsgleichung erster Ordnung ausgewertet:

Die Steigung der erhaltenen Gerade betrug kₐ = 0,004 min⁻¹. Daraus und aus der Konzentration an Polystyryllithium, [PS-Li], wurde eine Reaktionsgeschwindig-keitskonstante kₐₚₚ = kₐ / [PS-Li]^{0,5} = 0,043 M^{-0,5} min⁻¹ ermittelt.

Nach 24 h wurde die Reaktion mit 1 ml Methanol abgebrochen. Der Umsatz betrug 100 Gew.-%. Das erhaltene Polystyrol hatte eine Molmasse Mn = 3.300 g/mol und eine Molekulargewichtsverteilung Mw/Mn von 1,20.

Der Reststyrolgehalt lag unter 10 ppm.

Die Halbwertszeit der lebenden Polymerketten bei 150°C in Decalin wurde zu 63 min ermittelt.

### Beispiel 9

Beispiel 8 wurde bei einem Magnesium/Phenolat-Verhälntis von 3/2 wiederholt. Hierzu wurde zu der Poplystyryllithium-Lösung eine Mischung aus 6 ml einer 0,1 M Magnesiumphenolat-Lösung I1 und 3,25 ml einer 0,1 M Lösung von DBM in Cyclohexan zugegeben (molares Verhältnis Mg/Li = 3,0). Die Halbwertszeit bei 150°C in Decalin der lebenden Ketten wurde zu 110 min ermittelt.

## Patentansprüche

1. Verfahren zur anionischen Polymerisation von vinylaromatischen Monomeren oder Dienen in Gegenwart eines Lithiumorganyls oder Lithiumalkoholates und einer Magnesium- oder einer Aluminiumverbindung, **dadurch gekennzeichnet, daß** man ein sterisch gehindertes Phenol oder Amin zugibt.

2. Verfahren nach Anspruch 1, **dadurch gekennzeichnet, daß** man als sterisch gehindertes Phenol 2,6-Di-tert.-butyl-4-methylphenol oder 4-tert.-Butylpyrocatechol zugibt.

3. Verfahren nach Anspruch 1 oder 2, **dadurch gekennzeichnet, daß** man ein das sterisch gehinderte Phenol oder Amin enthaltendes vinylaromatisches Monomer oder Dien verwendet.

4. Verfahren nach einem der Ansprüche 1 bis 3, **dadurch gekennzeichnet, daß** man als vinylaromatisches Monomer Styrol, das mit 1 bis 200 ppm eines sterisch gehinderten Phenols oder Amins stabilisiert ist, verwendet.

5. Verfahren nach einem der Ansprüche 1 bis 4, **dadurch gekennzeichnet, daß** man die Polymerisation in Gegenwart einer Magnesium- und einer Aluminiumverbindung durchführt.

6. Verfahren nach einem der Ansprüche 1 bis 5, **dadurch gekennzeichnet, daß** man die Polymerisation bei einem molaren Verhältnis der Summe von Magnesium und Aluminium zu Lithium im Bereich von 0,2 bis 5 durchführt.

7. Verfahren nach einem der Ansprüche 1 bis 6, **dadurch gekennzeichnet, daß** man die Polymerisation bei einem molaren Verhältnis der Summe von Magnesium und Aluminium zur Summe von Phenol und Amin im Bereich von 1,1 bis 100 durchführt.

8. Verfahren nach einem der Ansprüche 1 bis 7, **dadurch gekennzeichnet, daß** man als Magnesiumverbindung (n-Butyl)-(s-butyl)magnesium, di-sec-Butyl-magnesium oder (n-Butyl)-(n-octyl)magnesium verwendet.

9. Verfahren nach einem der Ansprüche 1 bis 8, **dadurch gekennzeichnet, daß** man als Aluminiumverbindung ein Trialkylaluminium verwendet.

10. Verfahren nach einem der Ansprüche 1 bis 9, **dadurch gekennzeichnet, daß** man als Lithiumorganyl n-Butyllithium, s-Butyllithium oder ein lithiumterminiertes Polydien verwendet.

11. Verfahren nach einem der Ansprüche 1 bis 10, **dadurch gekennzeichnet, daß** man die Polymerisation des vinylaromatischen Monomeren in Gegenwart eines Styrol-Butadien-Copolymeren durchführt.

12. Verfahren nach einem der Ansprüche 1 bis 11, **dadurch gekennzeichnet, daß** man die Polymerisation durch Zugabe eines Alkohols, Kohlendioxid oder Wasser beendet.

13. Verfahren nach Anspruch 11 oder 12, **dadurch gekennzeichnet, daß** man die Polymerisation der vinylaromatischen Monomeren in einer Reaktorkaskade aus mindestens einem rückvermischenden Reaktor und mindestens einem nachgeschalteten Reaktor mit Pfropfenstromcharakteristik kontinuierlich durchführt.

## Claims

1. A process for the anionic polymerization of vinylaromatic monomers or of dienes in the presence of an organyllithium compound or of a lithium alcoholate and of a magnesium compound or of an aluminum compound, which comprises adding a sterically hindered phenol or amine.

2. A process as claimed in claim 1, wherein the sterically hindered phenol added comprises 2,6-di-tert-butyl-4-methylphenol or 4-tert-butylpyrocatechol.

3. A process as claimed in claim 1 or 2, wherein use is made of a diene or vinylaromatic monomer which comprises the sterically hindered phenol or amine.

4. A process as claimed in any one of claims 1 to 3, wherein the vinylaromatic monomer used comprises styrene stabilized with from 1 to 200 ppm of a sterically hindered phenol or amine.

5. A process as claimed in any one of claims 1 to 4, wherein the polymerization is carried out in the presence of a magnesium compound and of an aluminum compound.

6. A process as claimed in any one of claims 1 to 5, wherein the polymerization is carried out with a molar ratio of magnesium + aluminum:lithium of from 0.2 to 5.

7. A process as claimed in any one of claims 1 to 6, wherein the polymerization is carried out with a molar ratio of magnesium + aluminum:phenol + amine of from 1.1 to 100.

8. A process as claimed in any one of claims 1 to 7, wherein the magnesium compound used comprises (n-butyl) (sec-butyl) magnesium, di-sec-butylmagnesium or (n-butyl) (n-octyl) magnesium.

9. A process as claimed in any one of claims 1 to 8, wherein the aluminum compound used comprises a trialkylaluminum compound.

10. A process as claimed in any one of claims 1 to 9, wherein the organyllithium compound used comprises n-butyllithium, sec-butyllithium or a lithium-terminated polydiene.

11. A process as claimed in any one of claims 1 to 10, wherein the polymerization of the vinylaromatic monomer is carried out in the presence of a styrene-butadiene copolymer.

12. A process as claimed in any one of claims 1 to 11, wherein the polymerization is terminated by adding an alcohol, carbon dioxide or water.

13. A process as claimed in claim 11 or 12, wherein the polymerization of the vinylaromatic monomers is carried out continuously in a reactor cascade composed of at least one back-mixing reactor and of at least one downstream reactor of plug-flow type.

## Revendications

1. Procédé de polymérisation anionique de monomères vinylaromatiques ou de diènes en présence d'un organyle de lithium ou d'un alcoolate de lithium et d'un composé de magnésium ou d'aluminium, **caractérisé en ce que** l'on ajoute une amine ou un phénol à encombrement stérique.

2. Procédé selon la revendication 1, **caractérisé en ce que** l'on ajoute, en tant que phénol à encombrement stérique, du 2,6-di-tert.-butyl-4-méthylphénol ou du 4-tert.-butylpyrocatéchol.

3. Procédé selon la revendication 1 ou 2, **caractérisé en ce que** l'on utilise un diène ou un monomère vinylaromatique contenant l'amine ou le phénol à encombrement stérique.

4. Procédé selon l'une quelconque des revendications 1 à 3, **caractérisé en ce que** l'on utilise en tant que monomère vinylaromatique du styrène, lequel est stabilisé par 1 à 200 ppm d'une amine ou d'un phénol à encombrement stérique.

5. Procédé selon l'une quelconque des revendications 1 à 4, **caractérisé en ce que** l'on entreprend la polymérisation en présence d'un composé de magnésium et d'aluminium.

6. Procédé selon l'une quelconque des revendications 1 à 5, **caractérisé en ce que** l'on entreprend la polymérisation avec une proportion molaire de la somme du magnésium et de l'aluminium par rapport au lithium de l'ordre de 0,2 à 5.

7. Procédé selon l'une quelconque des revendications 1 à 6, **caractérisé en ce que** l'on entreprend la polymérisation avec une proportion molaire de la somme du magnésium et de l'aluminium par rapport à la somme du phénol et de l'amine de l'ordre de 1,1 à 100.

8. Procédé selon l'une quelconque des revendications 1 à 7, **caractérisé en ce que** l'on utilise en tant que composé de magnésium du (n-butyl)-(s-butyl)-magnésium, du di-sec.-butylmagnésium ou du (n-butyl)-(n-octyl)magnésium.

9. Procédé selon l'une quelconque des revendications 1 à 8, **caractérisé en ce que** l'on utilise en tant que composé d'aluminium un trialkylaluminium.

10. Procédé selon l'une quelconque des revendications 1 à 9, **caractérisé en ce que** l'on utilise en tant qu'organyle de lithium du n-butyllithium, de s-butyllithium ou un polydiène à terminaison lithium.

11. Procédé selon l'une quelconque des revendications 1 à 10, **caractérisé en ce que** l'on entreprend la polymérisation du monomère vinylaromatique en présence d'un copolymère de styrène-butadiène.

12. Procédé selon l'une quelconque des revendications 1 à 11, **caractérisé en ce que** l'on termine la polymérisation par addition d'un alcool, de dioxyde de carbone ou d'eau.

13. Procédé selon la revendication 11 ou 12, **caractérisé en ce que** l'on entreprend la polymérisation des monomères vinylaromatiques en continu dans une cascade de réacteurs constituée d'au moins un réacteur à remélange et d'au moins un réacteur en aval à caractéristique d'écoulement bouchon.
